# EUROPEAN PATENT APPLICATION

(11) **EP 4 226 773 A1**
(43) Date of publication of application: **16.08.2023**
(21) Application number: 21877551.8
(22) Date of filing: 04.10.2021
(51) Int. Cl.: A23L 23/00, A23D 7/00, A23L 11/00

(54) **PLANT-BASED SOUP BASE AND METHOD FOR PRODUCING PLANT-BASED SOUP BASE**

(30) Priority: 05.10.2020 JP 2020168485
(71) Applicant: Fuji Oil Holdings Inc., Izumisano-shi, Osaka 598-8540 (JP)
(72) Inventor: SHISHIDO, Yuusuke, Izumisano-shi, Osaka 598-8540 (JP); TAKEDA, Mariko, Izumisano-shi, Osaka 598-8540 (JP); SHIBATA, Munehisa, Izumisano-shi, Osaka 598-8540 (JP)
(74) Representative: Becker, Eberhard
(86) International application number: PCT/JP2021/036600
(87) International publication number: WO 2022/075252

(57) **Abstract**

The purpose of the present invention is to provide a plant-based soup base that exhibits an excellent richness and a rich aftertaste and that does so even without the use of animal-based starting materials, e.g., pork bones, chicken bones, dried bonito, and so forth. It has been discovered that an excellent richness and a rich aftertaste are exhibited by a plant-based soup base that is produced by carrying out mixing and then emulsification on a starting material that contains a flavored oil/fat and a plant milk cream.

## Description

### Technical Field

The present invention relates to a plant-based soup base and a method for producing a plant-based soup base.

### Related Art

In general, soups used in ramen or hot pot dishes use, as a main raw material, an animal-based raw material such as meat bones such as chicken bones or pork bones, or dried seafood such as dried bonito or dried sardines. The soups made using the animal-based raw material as the main raw material are able to exhibit richness and full-bodiness. However, these soups require a pretreatment such as scum removal or a long boiling process, and time and effort are needed.

Meanwhile, from a recent health-conscious trend or a religious point of view, there are needs for vegetarians to like plant-based foods that use no animal-based raw materials. However, even if soups are prepared mainly from a plant-based raw material, a process for boiling various vegetables for a long time is necessary, and after boiling, it is necessary to dispose of vegetable residues. There is also a problem that the soups made mainly from a plant-based raw material are insufficient in richness or full-bodied taste.

Soy milk gives a strong impression of being healthy and is used in various dishes, and it is also known to use soy milk as a raw material of soup. For example, Patent Document 1 describes a soup raw material for obtaining a soup in a coagulated state, characterized in that the soup raw material includes soy milk powder having a coagulation index of 15 or more and a nitrogen solubility index (NSI) of 80% or more, a coagulating agent, and a seasoning. Patent Document 2 discloses a soy milk soup as a soy milk product using sterilized soy milk imparted with richness. Patent Document 3 discloses a technique with respect to a plant-based cloudy soup base which is an oil-in-water emulsion composition containing a bean extract, fat and oil, and a plant seasoning and which is characterized by being cloudy when in a liquid state.

### Prior-Art Documents

### Patent Documents

Patent Document 1: Japanese Patent Laid-open No. S60-145073
Patent Document 2: Japanese Patent Laid-open No. 2004-261107
Patent Document 3: Japanese Patent Laid-open No. 2018-017428

### SUMMARY OF THE INVENTION

### Problems to Be Solved by the Invention

An object of the present invention is to provide a plant-based soup base that has good richness or a full-bodied aftertaste even if not using an animal-based raw material such as pork bones, chicken bones, and dried bonito.

### Means for Solving the Problems

As a result of intensive studies to solve the above problems, the present inventors have found that, by mixing and then emulsifying a raw material containing flavored oil and fat and plant milk cream, a thus produced plant-based soup base has good richness and a full-bodied aftertaste, thereby completing the present invention.

That is, the present invention includes:
(1) a method for producing a plant-based soup base, including mixing and then emulsifying a raw material containing flavored oil and fat and plant milk cream;
(2) the method for producing a plant-based soup base as described in (1), in which the flavored oil and fat contain at least a yeast extract;
(3) the method for producing a plant-based soup base as described in (1), in which a protein content in a solid content of the plant-based soup base is 1.4% to 26% by weight in terms of dry matter;
(4) the method for producing a plant-based soup base as described in (2), in which a protein content in a solid content of the plant-based soup base is 1.4% to 26% by weight in terms of dry matter;
(5) the method for producing a plant-based soup base as described in any one of (1) to (4), in which the plant milk cream is soy milk cream;
(6) the method for producing a plant-based soup base as described in any one of (1) to (5), in which the raw material further contains dietary fiber;
(7) the method for producing a plant-based soup base as described in (1), in which the plant milk cream contains 2.5% by weight or more of dietary fiber;
(8) the method for producing a plant-based soup base as described in (2), in which the plant milk cream contains 2.5% by weight or more of dietary fiber;
(9) the method for producing a plant-based soup base as described in (3), in which the plant milk cream contains 2.5% by weight or more of dietary fiber;
(10) the method for producing a plant-based soup base as described in (4), in which the plant milk cream contains 2.5% by weight or more of dietary fiber;
(11) the method for producing a plant-based soup base as described in (5) or (6), in which the plant milk cream contains 2.5% by weight or more of dietary fiber;
(12) the method for producing a plant-based soup base as described in (1), in which a pH of the plant milk cream is adjusted to pH 7.3 to 10;
(13) the method for producing a plant-based soup base as described in (2), in which a pH of the plant milk cream is adjusted to pH 7.3 to 10;
(14) the method for producing a plant-based soup base as described in (3), in which a pH of the plant milk cream is adjusted to pH 7.3 to 10;
(15) the method for producing a plant-based soup base as described in (4), in which a pH of the plant milk cream is adjusted to pH 7.3 to 10;
(16) the method for producing a plant-based soup base as described in any one of (5) to (11), in which a pH of the plant milk cream is adjusted to pH 7.3 to 10;
(17) a method for producing a soup, including blending, as a raw material, a plant-based soup base obtained by the method as described in any one of (1) to (16);
(18) a plant-based soup base that is an oil-in-water emulsion containing flavored oil and fat and plant milk cream;
(19) the plant-based soup base as described in (18), in which the flavored oil and fat contain at least a yeast extract; and
(20) a soup containing the plant-based soup base as described in (18) or (19).

In other words, the present invention includes:
(21) a method for producing a plant-based soup base, including mixing and then emulsifying a raw material containing flavored oil and fat and plant milk cream;
(22) the method for producing a plant-based soup base as described in (21), in which the plant milk cream is soy milk cream;
(23) the method for producing a plant-based soup base as described in (21) or (22), in which the raw material further contains dietary fiber;
(24) the method for producing a plant-based soup base as described in (21) or (22), in which the plant milk cream contains 2.5% by weight or more of dietary fiber;
(25) the method for producing a plant-based soup base as described in any one of (21) to (24), in which a pH of the plant milk cream is adjusted to pH 7.3 to 10;
(26) a method for producing a soup, including blending, as a raw material, a plant-based soup base obtained by the method as described in any one of (21) to (25);
(27) a plant-based soup base that is an oil-in-water emulsion containing flavored oil and fat and plant milk cream; and
(28) a soup containing the plant-based soup base as described in (27).

### Effects of the Invention

According to the present invention, a plant-based soup base can be provided having good richness and a full-bodied aftertaste even if not using an animal-based raw material such as pork bones or chicken bones.

### DESCRIPTION OF THE EMBODIMENTS

### (Method for Producing Plant-based Soup Base)

A plant-based soup base of the present invention can be produced by mixing and then emulsifying a raw material containing flavored oil and fat and plant milk cream.

The plant-based soup base of the present invention can be produced, for example, by the following method.

A raw material containing flavored oil and fat and plant milk cream is mixed and stirred for performing preliminary emulsification. Next, the resulting preliminary emulsion is homogenized at a pressure of 1 to 20 MPa using a homogenizing apparatus such as a homogenizer. After that, if necessary, heat sterilization is performed at 110 °C to 150 °C, preferably 120 °C to 140 °C, for 1 to 30 seconds, preferably 3 to 20 seconds. Next, if necessary, homogenization is performed again at a pressure of 1 to 50 MPa. Furthermore, cooling is performed if necessary, and a plant-based soup base can be produced.

During mixing of the raw material, a ratio of the flavored oil and fat in the raw material is preferably 10% to 90% by weight, more preferably 20% to 80% by weight, still more preferably 25% to 75% by weight, yet still more preferably 25% to 70% by weight, and yet still even more preferably 30% to 70% by weight, in terms of dry matter. A ratio of the plant milk cream in the raw material is preferably 10% to 90% by weight, more preferably 20% to 80% by weight, still more preferably 25% to 75% by weight, yet still more preferably 30% to 75% by weight, and yet still even more preferably 30% to 70% by weight, in terms of dry matter.

### (Plant-based Soup Base)

In the present invention, the term "soup base" refers to a basic raw material in preparing soup used in ramen, instant noodles, or the like.

The plant-based soup base of the present invention is an oil-in-water emulsion containing flavored oil and fat and plant milk cream. The plant-based soup base refers to one in which a plant-based raw material of flavored oil and fat containing plant oil and fat as a base is used in a part or the whole of a raw material. That is, the plant-based soup base means a soup base that contains a plant-based raw material and may contain an animal-based raw material such as chicken bones and pork bones in a part of the raw material.

The amount of the animal-based raw material is generally less than 50% by weight, preferably 40% by weight or less, more preferably 30% by weight or less, still more preferably 20% by weight or less, yet still more preferably 10% by weight or less, and most preferably 0% by weight, of the whole raw material excluding water.

The plant-based soup base of the present invention can be produced using only a plant-based raw material and without using any animal-based raw material.

The plant-based soup base obtained by the method of the present invention has good richness and a full-bodied aftertaste.

The term "richness" refers to strength of taste felt during eating, and the term "full-bodied aftertaste" refers to a full-bodied taste felt after eating and swallowing.

A protein content in the solid content of the plant-based soup base is preferably 1.4% to 26% by weight, more preferably 13% to 26% by weight, in terms of dry matter. By setting the protein content within such a range, relatively sufficient richness or full-bodiness of aftertaste can be obtained. The protein content is measured by the Kjeldahl method using a coefficient of 6.25.

A lipid content in the solid content of the plant-based soup base can be set to preferably 5% to 99% by weight, more preferably 10% to 99% by weight, 20% to 99 wt%, 30% to 99% by weight, 40% to 99% by weight, 50% to 99% by weight, 60% to 99% by weight, or 65% to 99% by weight, in terms of dry matter. An upper limit of the lipid content can be set to 98% by weight, or 97% by weight, and a lower limit thereof can be set to 66% by weight, 67% by weight, or 68% by weight. The lipid content is measured by a chloroform-methanol extraction method.

### (Flavored Oil and Fat)

In the present invention, the flavored oil and fat include oil and fat that have been flavored by adding extracts, a flavoring, a spice, a vegetable, a seasoning, a milk raw material, or any other plant-derived raw material such as rice bran to plant oil and fat, and then subjecting the mixture to processing such as heating. The flavored oil and fat also include those in which a flavor is extracted from a seasoning liquid containing an amino acid, sugars and a lipid by using plant oil and fat. Preferably, the flavored oil and fat include those in which a flavor is extracted from a seasoning liquid containing at least a yeast extract by using plant oil and fat. That is, the flavored oil and fat contain at least a yeast extract. That is, the flavored oil and fat include "oil and fat imparted with a flavor" containing plant oil and fat as a base to which a flavor is separately imparted. On the other hand, the flavored oil and fat do not include plant oil and fat obtained simply by extracting oil and fat from a plant raw material, such as sesame oil.

Examples of the extracts include: beef extract, pork extract, chicken extract, onion extract, clam extract, and oyster extract.

Examples of the flavoring include: vanilla, and oil content of citrus fruits including lemon, orange, lime, grapefruit, yuzu, and sudachi, and artificial, natural and synthetic fruits such as a fruit essence containing apple, pear, peach, grape, blueberry, strawberry, raspberry, cherry, plum, pineapple, watermelon, apricot, banana, melon, apricot, Japanese plum, cherry, raspberry, blackberry, tropical fruit, mango, mangosteen, pomegranate, or papaya. Other examples of the flavoring that can be used include: a milk flavor, a butter flavor, a cheese flavor, a cream flavor and a yogurt flavor; a vanilla flavor; a tea or coffee flavoring, such as a green tea flavor, an oolong tea flavor, a black tea flavor, a cocoa flavor, a chocolate flavor, and a coffee flavor; a mint flavoring, such as a peppermint flavor, a spearmint flavor, and a Japanese mint flavor; a spicy flavoring, such as an asafoetida flavor, an ajwain flavor, an anise flavor, an angelica flavor, a fennel flavor, an allspice flavor, a cinnamon flavor, a chamomile flavor, a mustard flavor, a cardamom flavor, a caraway flavor, a cumin flavor, a clove flavor, a pepper flavor, a coriander flavor, a sassafras flavor, a summer savory flavor, a Japanese pepper flavor, a perilla flavor, a juniper berry flavor, a ginger flavor, a star anise flavor, a horseradish flavor, a thyme flavor, a tarragon flavor, a dill flavor, a chili pepper flavor, a nutmeg flavor, a basil flavor, a marjoram flavor, a rosemary flavor, a bay leaf flavor, and a wasabi (Japanese wasabi) flavor; an alcohol flavoring, such as a wine flavor, a whiskey flavor, a brandy flavor, a rum flavor, a gin flavor, and a liqueur flavor; a floral flavoring; and a botanical flavoring, such as an onion flavor, a garlic flavor, a cabbage flavor, a carrot flavor, a celery flavor, a mushroom flavor, and a tomato flavor. These flavorings may be used in liquid or solid form and may be used individually or as mixtures.

Examples of flavored oil and fat to which the above flavoring or the like is added include: flavored oil based on meat such as beef, pork, lamb, and chicken; flavored oil based on a spice, a spicy vegetable or a vegetable such as herb, garlic, ginger, onion, sesame, green onion, kombu, pepper, wasabi, Japanese pepper, and tomato; flavored oil based on cooking such as for fried rice, subuta (sweet and sour pork), mapo tofu, and consommé; flavored oil based on a seasoning such as soy sauce, miso, mirin, sauce, tomato ketchup, and mayonnaise; and flavored oil based on seafood such as crab, scallop, tuna, bonito, and shrimp.

### (Plant Oil and Fat)

Examples of the plant oil and fat used in the flavored oil and fat include: rapeseed oil, soybean oil, sunflower seed oil, cottonseed oil, peanut oil, rice bran oil, corn oil, safflower oil, olive oil, kapok oil, sesame oil, evening primrose oil, palm oil, shea fat, sal fat, cacao fat, coconut oil, and palm kernel oil, or processed oil and fat obtained by subjecting the foregoing to one or more treatments selected from hydrogenation, fractionation and transesterification.

### (Plant Milk Cream)

The plant milk cream of the present invention has a higher lipid content than that of plant milk, and preferably has a lipid content of 25% by weight or more in the dry matter. The lipid content in the dry matter is preferably 30% by weight or more, more preferably 35% by weight or more, and still more preferably 40% by weight or more. An upper limit thereof is preferably 80% by weight or less, more preferably 75% by weight or less, and still more preferably 70% by weight or less.

Examples of plant species include: beans, such as soybean and peanut; and nuts, such as peanut, almond, coconut, walnut, cashew, pistachio, macadamia nut, and hazelnut. Soybean-derived soy milk cream is preferable.

Here, soy milk cream made from soybeans is described as an example. Soy milk cream is also referred to as a soybean emulsion composition.

In general, fresh cream is produced by being separated from milk with a centrifuge. As one aspect, similarly, a soy milk cream can be used which is obtained by, for example, collecting a cream layer having a low specific gravity and a rich oil content, in which the cream layer is generated by further centrifugation of soy milk obtained from whole soybeans. However, this production method is not particularly limited. As another aspect, the soy milk cream may include a soybean emulsion composition obtained by adding commercially available soy milk, oil and fat, and if necessary, an emulsifier.

A lower limit of the lipid content (meaning the content as a chloroform/methanol mixed solvent extract) of the soy milk cream is preferably 25% by weight or more, more preferably 30% by weight or more, still more preferably 35% by weight or more, and yet still more preferably 40% by weight or more in the dry matter. An upper limit of the lipid content is preferably 80% by weight or less, more preferably 75% by weight or less, and still more preferably 70% by weight or less.

A protein content of the soy milk cream is preferably 15% by weight or more, more preferably 20% by weight or more, and still more preferably 25% by weight or more in the dry matter. An upper limit thereof is preferably 40% by weight or less, more preferably 35% by weight or less. A lipid/protein content ratio of the soy milk cream is preferably 1.0 or more, more preferably 1.2 or more on the basis of weight per dry matter.

According to the 2015 edition (seventh revision), in general full fat soy milk, the protein content in the dry matter is 39.1% by weight, the lipid content in the dry matter is 21.7% by weight, and the lipid/protein content ratio is 0.55.

As another preferable aspect of the above soy milk cream, a "lipophilic protein" among soybean proteins is preferably concentrated in view of exhibiting richness and a good soybean-derived flavor. As such a soybean protein raw material, for example, a soybean emulsion composition described in Japanese Patent Laid-open No. 2012-16348 may be used. An indicator of whether the lipophilic protein is concentrated can be inferred by calculating a lipophilic proteins content index (LCI) value described in the above patent publication. In the present invention, it is more preferable to use a soy milk cream in which a lipophilic protein is concentrated and which has an LCI value of 50% or more, preferably 55% or more. As a commercially available soy milk cream having an LCI value of 55% or more, "Ko-cream" (registered trademark) manufactured by Fuji Oil Co., Ltd., for example, may be used.

### (Dietary Fiber)

In the present invention, the raw material preferably further contains dietary fiber in addition to the flavored oil and fat and the plant milk cream. By further containing dietary fiber, a soup base has relatively good richness and a relatively full-bodied aftertaste. Thus, when this soup base is used a raw material of soup, a soup can be prepared having relatively good richness and a relatively full-bodied aftertaste.

Examples of the dietary fiber include: okara of beans such as soybean, chitosan, cellulose, hemicellulose, sodium carboxymethylcellulose, glucan, lignin, wheat bran, wheat germ, oatmeal, and cornmeal. Among them, okara of beans such as soybean is preferably contained.

The dietary fiber may be added as a raw material separately from the flavored oil and fat and the plant milk cream, and mixed and emulsified to produce a soup base. Alternatively, a plant milk cream that contains dietary fiber in advance may be used. Among them, the plant milk cream that contains dietary fiber in advance is preferably used. The dietary fiber may be added to and mixed with plant milk cream to obtain a plant milk cream containing dietary fiber, or a plant milk cream may be prepared so as to contain dietary fiber in a manufacturing process thereof.

In the case where the dietary fiber is contained in the plant milk cream, the dietary fiber content in the plant milk cream is preferably 2.5% by weight or more, more preferably 3% by weight or more. While an upper limit of the dietary fiber content is not set, the dietary fiber content is preferably 10% by weight or less, more preferably 8% by weight or less, and still more preferably 6% by weight or less. The dietary fiber content is a value measured by the enzymatic gravimetric method.

In the case where the dietary fiber is added separately, the amount of the dietary fiber added may be an amount corresponding to the above dietary fiber content in the plant milk cream.

As a typical example of preparation to contain dietary fiber in a manufacturing process of plant milk cream, a case of soy milk cream containing okara as the dietary fiber is described.

As the soy milk cream containing okara, an okara-containing soy milk cream before separation of okara from the soy milk cream may be used, or a mixture obtained by mixing the okara separated during production of the soy milk cream into the soy milk cream again may be used.

The soy milk cream containing dietary fiber thus obtained has a dietary fiber content of 2.5% by weight or more, a protein content of 25% by weight or more per dry matter, a lipid content (meaning the content as a chloroform/methanol mixed solvent extract) of 25% by weight or more, and a water content of 70% to 90% by weight.

The protein content is preferably 30% by weight or more. While an upper limit of the protein content is not set, the protein content is preferably 50% by weight or less, more preferably 45% by weight or less.

The lipid content is preferably 30% by weight or more, more preferably 40% by weight or more. While an upper limit of the lipid content is not set, the lipid content is preferably 65% by weight or less, more preferably 55% by weight or less.

The water content is preferably 75% to 90% by weight.

The lipid/protein content ratio of the soy milk cream containing dietary fiber is preferably 1.0 or more, more preferably 1.2 or more on the basis of weight per dry matter.

As a commercially available soy milk cream containing 2.5% by weight or more of dietary fiber, "soy milk cream containing a soybean dietary fiber" manufactured by Fuji Oil Co., Ltd., for example, may be used.

### (pH Adjustment of Plant Milk Cream)

In the present invention, by producing a plant-based soup base using, as a raw material, a plant milk cream whose pH has been adjusted using an alkaline agent, the soup base can be improved in richness and full-bodiness of aftertaste.

Specifically, the pH of the plant milk cream is adjusted preferably to 7.3 to 10, more preferably to 7.3 to 9.5, still more preferably to 7.4 to 9.0, yet still more preferably to 7.5 to 8.8, and yet still even more preferably to 7.6 to 8.6 by using an alkaline agent such as sodium carbonate or sodium hydroxide.

### (Other Raw Materials)

The plant-based soup base of the present invention may contain a raw material other than the flavored oil and fat and the plant milk cream mentioned above. Examples thereof include starch, dextrin, an oligosaccharide, a thickener, a sweetener, an acidulant, a seasoning, an emulsifier, plant milk such as soy milk, soybean flour, a plant protein, and water.

### (Soup)

Various raw materials such as an inorganic salt, an acid, an amino acid, a nucleic acid, sugars, a seasoning, and a spice can be added to the plant-based soup base of the present invention to produce soup that can be used in various foods. Examples of the various foods include: a soup drink, such as corn soup and potage soup; soup used in noodles such as ramen, instant noodles, pasta, pho, laksa, and mala noodles; soup used in hot pot dishes; soup used in rice dishes such as risotto; and soup used in gratin or curry.

These soups include those in a liquid form and those in a powder form.

### Examples

The present invention will be described below by way of examples. Parts and % in the examples mean on the basis of weight unless otherwise specified.

### (Examples 1 and 2 and Comparative Example 1)

First, plant milk cream, dietary fiber-containing soy milk cream or full fat soy milk, flavored oil and fat, and an emulsifier were mixed together at 60 °C in accordance with the formulation shown in Table 1. The mixture was homogenized with a homogenizer at a pressure of 2 MPa, then sterilized by heating, and homogenized again at a pressure of 12 MPa to obtain a plant-based soup base.

As the plant milk cream, soy milk cream ("Ko-cream": manufactured by Fuji Oil Co., Ltd., solid content: 19.0%, dietary fiber content: 0.1 %, protein content (in terms of dry matter): 29.5%, lipid content (in terms of dry matter): 64.7%), or dietary fiber-containing soy milk cream ("soy milk cream containing a soybean dietary fiber": manufactured by Fuji Oil Co., Ltd., solid content: 20.0%, dietary fiber content: 4.1%, protein content (in terms of dry matter): 34.5%, lipid content (in terms of dry matter): 41.0%) was used. As the full fat soy milk, "unadjusted soy milk" (solid content: 9.2%, dietary fiber content: 0.2%, protein content (in terms of dry matter): 51.1%, lipid content (in terms of dry matter): 39.1%) manufactured by Fuji Oil Co., Ltd. was used.

Each of the soy milk cream, the dietary fiber-containing soy milk cream and the full fat soy milk had a pH of 6.7.

The flavored oil and fat were those in which a flavor was extracted from a seasoning liquid containing an amino acid, sugars and a lipid by using palm oil (manufactured by Fuji Oil Co., Ltd.). The flavored oil and fat exhibited an animal fat-like flavor in an evaluation carried out by five experienced panelists in a sensory evaluation of the flavored oil and fat.

A flavor evaluation of the obtained plant-based soup base was carried out based on the criteria shown below, and results are shown in Table 1. The protein content in the table is a value in terms of dry matter in the solid content of the plant-based soup base. The lipid content in the table is a value in terms of dry matter in the solid content of the plant-based soup base.

### (Flavor Evaluation)

Five experienced consumer panelists were asked to carry out a sensory evaluation of soups in-house. The panelists were asked to taste the plant-based soup base obtained in each example and comparative example, carry out a sensory evaluation with respect to the flavor (richness, full-bodiness of aftertaste) according to the following evaluation criteria and give points.

### (Evaluation Criteria)

- Richness
   5 points: very good (richness is very strongly felt)
   4 points: good
   3 points: average
   2 points: slightly poor
   1 point: poor (almost no richness is felt)
- Full-bodiness of aftertaste
   5 points: very good (a full-bodied aftertaste is very strongly felt)
   4 points: good
   3 points: average
   2 points: slightly poor
   1 point: poor (almost no full-bodiness is felt in the aftertaste)
An average of points given by each panelist was calculated. Then, according to the average, the following five-grade evaluation was carried out:
A: 4.5 points or more
B: 3.5 points or more and less than 4.5 points
C: 2.5 points or more and less than 3.5 points
D: 1.5 points or more and less than 2.5 points
E: less than 1.5 points
Any evaluation item was regarded as of acceptable quality if it was evaluated as C or higher.

**(Table 1)**

| (Unit: part) | | | |
|---|---|---|---|
| | Example 1 | Example 2 | Comparative Example 1 |
| Full fat soy milk | - | - | 44 (28.1% in terms of dry matter in raw material) |
| Soy milk cream | 21 (28.1% in terms of dry matter in raw material) | - | - |
| Dietary fiber-containing soy milk cream | - | 20 (28.2% in terms of dry matter in raw material) | - |
| Flavored oil and fat | 10 (70.5% in terms of dry matter in raw material) | 10 (70.4% in terms of dry matter in raw material) | 10 (70.2% in terms of dry matter in raw material) |
| Emulsifier | 0.2 | 0.2 | 0.2 |
| Water | 68.8 | 69.8 | 45.8 |
| Protein content (%) | 8.3 | 9.7 | 14.5 |
| Lipid content (%) | 88.7 | 82.0 | 81.3 |
| Evaluation results | | | |
| Richness | C | C | E |
| Full-bodiness of aftertaste | C | C | E |
| Acceptance | Acceptable | Acceptable | Unacceptable |

As shown in the results, a plant-based soup base prepared by blending soy milk cream or dietary fiber-containing soy milk cream with flavored oil and fat was good in both richness and full-bodiness of aftertaste and was of acceptable quality. On the other hand, a case using full fat soy milk was regarded as unacceptable.

### (Example 3)

The flavored oil and fat of Example 2 were replaced with flavored oil and fat in which a flavor was extracted from a seasoning liquid containing a yeast extract, an amino acid, sugars and a lipid by using palm oil (manufactured by Fuji Oil Co., Ltd.), and a plant-based soup base was obtained in accordance with the production method of Example 2.

The obtained plant-based soup base was subjected to a flavor evaluation in the same manner as in Example 1, and results are shown in Table 2. The protein content in the table is a value in terms of dry matter in the solid content of the plant-based soup base. The lipid content in the table is a value in terms of dry matter in the solid content of the plant-based soup base.

**(Table 2)**

| (Unit: part) | |
|---|---|
| | Example 3 |
| Dietary fiber-containing soy milk cream | 20 (28.2% in terms of dry matter in raw material) |
| Flavored oil and fat | 10 (70.4% in terms of dry matter in raw material) |
| Emulsifier | 0.2 |
| Water | 69.8 |
| Protein content (%) | 9.7 |
| Lipid content (%) | 82.0 |
| Evaluation results | |
| Richness | B |
| Full-bodiness of aftertaste | B |
| Acceptance | Acceptable |

As shown in the results, a plant-based soup base prepared by blending dietary fiber-containing soy milk cream with flavored oil and fat in which a flavor was extracted from a seasoning liquid containing a yeast extract was good in both richness and full-bodiness of aftertaste and was of acceptable quality.

### (Comparative Example 2 and Examples 4 to 9) Protein Content

The soy milk cream and plant protein of Example 1, the flavored oil and fat of Example 1, and an emulsifier were mixed together at 60 °C in accordance with the formulation shown in Table 1. The mixture was homogenized with a homogenizer at a pressure of 2 MPa, then sterilized by heating, and homogenized again at a pressure of 12 MPa to obtain a plant-based soup base.

As the plant protein, one ("FujiPro CLE": manufactured by Fuji Oil Co., Ltd., solid content: 94.5%, protein content (in terms of dry matter): 91.3%) was used.

The obtained plant-based soup base was subjected to a flavor evaluation in the same manner as in Example 1, and results are shown in Table 3. The protein content in the table is a value in terms of dry matter in the solid content of the plant-based soup base. The lipid content in the table is a value in terms of dry matter in the solid content of the plant-based soup base.

**(Table 3)**

| (Unit: part) | | | | | | | |
|---|---|---|---|---|---|---|---|
| | Comparative Example 2 | Example 4 | Example 5 | Example 6 | Example 7 | Example 8 | Example 9 |
| Soy milk cream | 2 (3.6% in terms of dry matter in raw material) | 2.7 (4.8% in terms of dry matter in raw material) | 9 (14.3% in terms of dry matter in raw material) | 18 (25.1% in terms of dry matter in raw material) | 44.7 (45.4% in terms of dry matter in raw material) | 89.8 (62.6% in terms of dry matter in raw material) | 86.5 (55.2% in terms of dry matter in raw material) |
| Plant protein | - | - | - | - | - | - | 3.3 (10.5% in terms of dry matter in raw material) |
| Flavored oil and fat | 10 (94.5% in terms of dry matter in raw material) | 10 (93.3% in terms of dry matter in raw material) | 10 (84.0% in terms of dry matter in raw material) | 10 (73.4% in terms of dry matter in raw material) | 10 (53.5% in terms of dry matter in raw material) | 10 (36.7% in terms of dry matter in raw material) | 10 (33.6% in terms of dry matter in raw material) |
| Emulsifier | 0.2 | 0.2 | 0.2 | 0.2 | 0.2 | 0.2 | 0.2 |
| Water | 87.8 | 87.1 | 80.3 | 71.8 | 45.1 | - | - |
| Protein content (%) | 1.1 | 1.4 | 4.2 | 7.4 | 13.4 | 18.5 | 25.9 |
| Lipid content (%) | 96.8 | 96.4 | 93.3 | 89.6 | 82.9 | 77.2 | 69.3 |
| Evaluation results | | | | | | | |
| Richness | D | C | C | C | B | B | B |
| Full-bodiness of aftertaste | D | C | C | C | B | B | B |
| Acceptance | Unacceptable | Acceptable | Acceptable | Acceptable | Acceptable | Acceptable | Acceptable |

As shown in Table 3, by adjusting the protein content in the solid content of the plant-based soup base to 1.4% to 25.9% in terms of dry matter, both richness and full-bodiness of aftertaste were good and the quality was acceptable.

### (Examples 10 to 14) pH Adjustment of Dietary Fiber-containing Soy Milk Cream

The temperature of the dietary fiber-containing soy milk cream was adjusted to 60 °C, and the pH thereof was adjusted to 7.2 to 10.0 using sodium carbonate. Next, each soy milk cream or dietary fiber-containing soy milk cream whose pH has been adjusted, flavored oil and fat, and an emulsifier were mixed together at 60 °C in accordance with the formulation shown in Table 2. The mixture was homogenized with a homogenizer at a pressure of 2 MPa, then sterilized by heating, and homogenized again at a pressure of 12 MPa to obtain a plant-based soup base.

The same dietary fiber-containing soy milk cream and flavored oil and fat as those in Example 1 were used.

The obtained plant-based soup base was subjected to a flavor evaluation in the same manner as in Example 1, and results are shown in Table 4. The protein content in the table is a value in terms of dry matter in the solid content of the plant-based soup base. The lipid content in the table is a value in terms of dry matter in the solid content of the plant-based soup base.

**(Table 4)**

| (Unit: part) | | | | | |
|---|---|---|---|---|---|
| | Example 10 | Example 11 | Example 12 | Example 13 | Example 14 |
| Dietary fiber-containing soy milk cream | 35 (31.5% in terms of dry matter in raw material) | 35 (31.5% in terms of dry matter in raw material) | 35 (31.5% in terms of dry matter in raw material) | 35 (31.5% in terms of dry matter in raw material) | 35 (31.5% in terms of dry matter in raw material) |
| pH of dietary fiber-containing soy milk cream | 7.2 | 7.4 | 7.8 | 8.5 | 10.0 |
| Flavored oil and fat | 15 (67.6% in terms of dry matter in raw material) | 15 (67.6% in terms of dry matter in raw material) | 15 (67.6% in terms of dry matter in raw material) | 15 (67.6% in terms of dry matter in raw material) | 15 (67.6% in terms of dry matter in raw material) |
| Emulsifier | 0.2 | 0.2 | 0.2 | 0.2 | 0.2 |
| Water | 49.8 | 49.8 | 49.8 | 49.8 | 49.8 |
| Protein content (%) | 10.9 | 10.9 | 10.9 | 10.9 | 10.9 |
| Lipid content (%) | 80.5 | 80.5 | 80.5 | 80.5 | 80.5 |
| Evaluation results | | | | | |
| Richness | C | B | A | A | B |
| Full-bodiness of aftertaste | C | B | A | A | C |
| Acceptance | Acceptable | Acceptable | Acceptable | Acceptable | Acceptable |

As shown in Table 4, by adjusting the dietary fiber-containing soy milk cream to pH 7.3 to 10.0 in advance, richness and full-bodiness of aftertaste tended to improve. In particular, Examples 12 and 13 in which the pH was adjusted to 7.8 and 8.5 were very good in richness and full-bodiness of aftertaste.

### (Example 15) Almond Cream

The soy milk cream of Example 1 was replaced with almond cream, and a plant-based soup base was obtained in accordance with the production method of Example 2. As the almond cream, one ("dehulled almond paste": manufactured by Fuji Oil Co., Ltd., solid content: 98.8%, protein content (in terms of dry matter): 19.5%, lipid content (in terms of dry matter): 56.8%) was used.

The obtained plant-based soup base was subjected to a flavor evaluation in the same manner as in Example 1, and results are shown in Table 5. The protein content in the table is a value in terms of dry matter in the solid content of the plant-based soup base. The lipid content in the table is a value in terms of dry matter in the solid content of the plant-based soup base.

### (Example 16) Coconut Cream

The soy milk cream of Example 1 was replaced with coconut cream, and a plant-based soup base was obtained in accordance with the production method of Example 2. As the coconut cream, one ("kara Coconut Cream": manufactured by Sambu Group, solid content: 30.82%, protein content (in terms of dry matter): 8.4%, lipid content (in terms of dry matter): 80.1%) was used.

The obtained plant-based soup base was subjected to a flavor evaluation in the same manner as in Example 1, and results are shown in Table 5. The protein content in the table is a value in terms of dry matter in the solid content of the plant-based soup base. The lipid content in the table is a value in terms of dry matter in the solid content of the plant-based soup base.

**(Table 5)**

| (Unit: part) | | |
|---|---|---|
| | Example 15 | Example 16 |
| Almond cream | 21 (67.0% in terms of dry matter in raw material) | - |
| Coconut cream | - | 21 (38.8% in terms of dry matter in raw material) |
| Flavored oil and fat | 10 (32.3% in terms of dry matter in raw material) | 10 (60.0% in terms of dry matter in raw material) |
| Emulsifier | 0.2 | 0.2 |
| Water | 69.8 | 69.8 |
| Protein content (%) | 13.1 | 3.3 |
| Lipid content (%) | 70.4 | 91.1 |
| Evaluation results | | |
| Richness | C | C |
| Full-bodiness of aftertaste | C | C |
| Acceptance | Acceptable | Acceptable |

As shown in Table 5, a plant-based soup base prepared by blending almond cream or coconut cream with flavored oil and fat was also good in richness and full-bodiness of aftertaste and was of acceptable quality.

## Claims

1. A method for producing a plant-based soup base, comprising mixing and then emulsifying a raw material containing flavored oil and fat and plant milk cream.

2. The method for producing a plant-based soup base according to claim 1, wherein the flavored oil and fat contain at least a yeast extract.

3. The method for producing a plant-based soup base according to claim 1, wherein a protein content in a solid content of the plant-based soup base is 1.4% to 26% by weight in terms of dry matter.

4. The method for producing a plant-based soup base according to claim 2, wherein a protein content in a solid content of the plant-based soup base is 1.4% to 26% by weight in terms of dry matter.

5. The method for producing a plant-based soup base according to any one of claims 1 to 4, wherein the plant milk cream is soy milk cream.

6. The method for producing a plant-based soup base according to any one of claims 1 to 5, wherein the raw material further contains dietary fiber.

7. The method for producing a plant-based soup base according to claim 1, wherein the plant milk cream contains 2.5% by weight or more of dietary fiber.

8. The method for producing a plant-based soup base according to claim 2, wherein the plant milk cream contains 2.5% by weight or more of dietary fiber.

9. The method for producing a plant-based soup base according to claim 3, wherein the plant milk cream contains 2.5% by weight or more of dietary fiber.

10. The method for producing a plant-based soup base according to claim 4, wherein the plant milk cream contains 2.5% by weight or more of dietary fiber.

11. The method for producing a plant-based soup base according to claim 5 or 6, wherein the plant milk cream contains 2.5% by weight or more of dietary fiber.

12. The method for producing a plant-based soup base according to claim 1, wherein a pH of the plant milk cream is adjusted to pH 7.3 to 10.

13. The method for producing a plant-based soup base according to claim 2, wherein a pH of the plant milk cream is adjusted to pH 7.3 to 10.

14. The method for producing a plant-based soup base according to claim 3, wherein a pH of the plant milk cream is adjusted to pH 7.3 to 10.

15. The method for producing a plant-based soup base according to claim 4, wherein a pH of the plant milk cream is adjusted to pH 7.3 to 10.

16. The method for producing a plant-based soup base according to any one of claims 5 to 11, wherein a pH of the plant milk cream is adjusted to pH 7.3 to 10.

17. A method for producing a soup, comprising blending, as a raw material, a plant-based soup base obtained by the method according to any one of claims 1 to 16.

18. A plant-based soup base that is an oil-in-water emulsion containing flavored oil and fat and plant milk cream.

19. The plant-based soup base according to claim 18, wherein the flavored oil and fat contain at least a yeast extract.

20. A soup containing the plant-based soup base according to claim 18 or 19.
